# EUROPEAN PATENT APPLICATION

(11) **EP 4 586 385 A1**
(43) Date of publication of application: **16.07.2025**
(21) Application number: 23862821.8
(22) Date of filing: 28.07.2023
(51) Int. Cl.: H01M 50/367, H01M 50/209, H01M 50/213, H01M 50/227, H01M 50/289, H01M 50/383

(54) **BATTERY PACK**

(30) Priority: 07.09.2022 JP 2022142094
(71) Applicant: Panasonic Energy Co., Ltd., Osaka 570-8511 (JP)
(72) Inventor: WASHIDA, Takeshi, Kadoma-shi, Osaka 571-0057 (JP)
(74) Representative: Novagraaf International SA
(86) International application number: PCT/JP2023/027788
(87) International publication number: WO 2024/053278

(57) **Abstract**

A battery pack that can smoothly exhaust high-temperature and high-pressure gas to outside even if high-temperature and high-pressure gas is exhausted from a secondary battery cell inside the battery pack. Battery pack 100 includes a plurality of secondary battery cells 1, and outer covering case 10 housing the plurality of secondary battery cells 1. Outer covering case 10 includes gas exhaust hole 13 in a part thereof, and outer covering case 10 includes, inside thereof, an exhaust guide 6 defining gas guiding path 34 that guides gas to the gas exhaust hole 13 when the gas is released from any one of the plurality of secondary battery cells, and exhaust guide 6 includes inclined wall 18 inclined from an orientation facing the direction in which the gas is exhausted.

## Description

### Technical Field

The present disclosure relates to a battery pack.

### Background Art

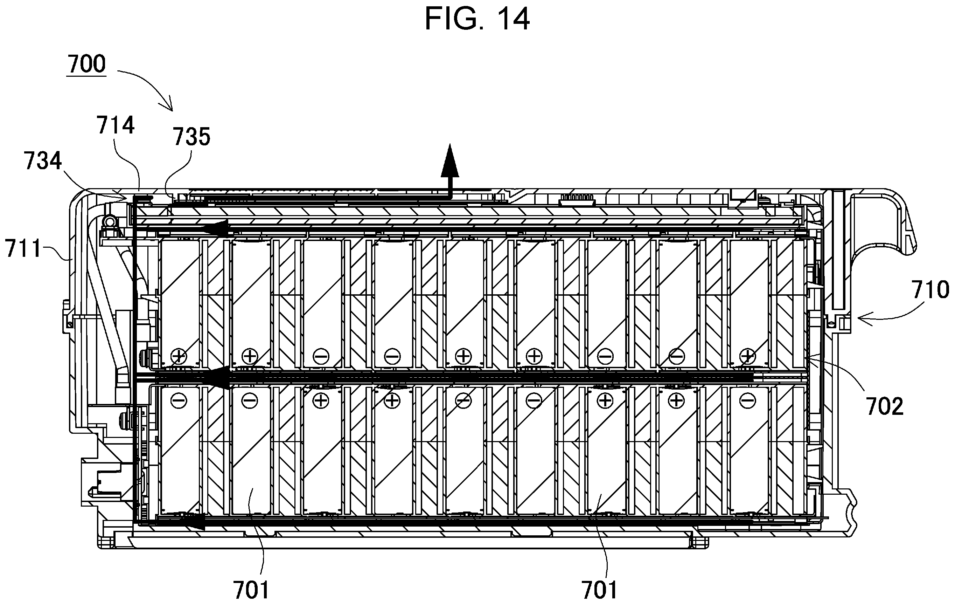

In an electrical device using a rechargeable secondary battery such as a lithium-ion secondary battery, a battery pack is used, and the battery pack includes a plurality of secondary battery cells 701 housed in outer covering case 710 as shown in a sectional view of FIG. 14 so that the secondary batteries can be exchanged. Examples of electrical devices driven by a battery pack include various devices such as electric carts and power tools.

On the other hand, a secondary battery cell may generate heat due to some abnormality. At this time, since a pressure of the inside of the outer covering can of the secondary battery cell becomes high, a safety valve provided in the outer covering can is opened and high-temperature and high-pressure gas is exhausted from the outer covering can. In the conventional battery pack, exhaust path 734 is defined in outer covering case 710 so that gas can be safely exhausted to the outside of the battery pack when the gas is exhausted from outer covering case 710 of any one of the secondary battery cells. Exhaust path 734 was formed by wall 735.

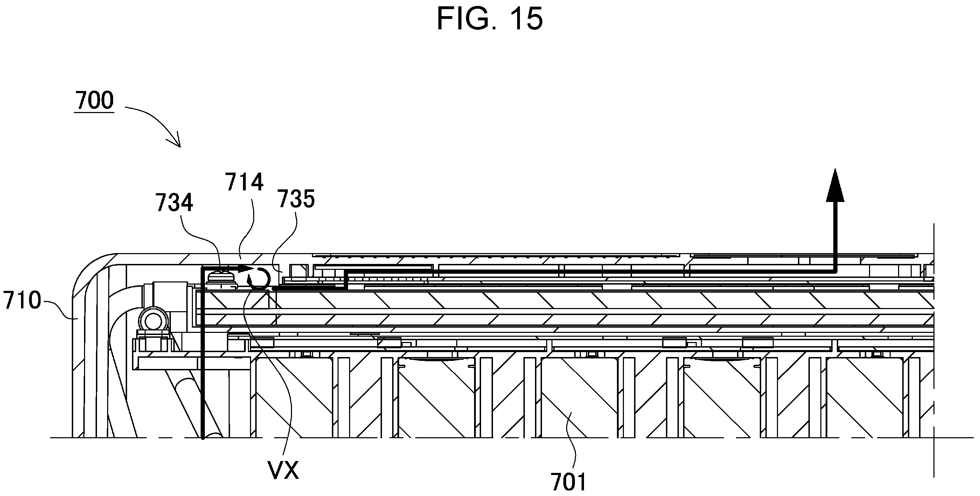

However, the inventors of the present application have found that if the high-temperature and high-pressure gas collides with wall 735 while being guided through exhaust path 734, as shown in FIG. 15, a vortex VX may be generated in exhaust path 734 of combustion gas may retain. As a result, outer covering case 710 may be heated and melted by the retaining combustion gas, and the combustion gas may leak from outer covering case 710.

### Citation List

### Patent Literature

[PTL 1] Japanese Unexamined Patent Application, Publication No. 2013-084558

### SUMMARY OF THE INVENTION

### Problems to be solved by the invention

An object of the present disclosure is to provide a battery pack that can smoothly exhaust high-temperature and high-pressure gas to the outside even if high-temperature and high-pressure gas is exhausted from a secondary battery cell inside the battery pack.

### Solution to a problem

A battery pack according to one embodiment of the present invention is a battery pack including a plurality of secondary battery cells, and an outer covering case for housing the plurality of secondary battery cells, the outer covering case including a gas exhaust hole opened in a part of a surface of the outer covering case, the outer covering case including an exhaust guide defining a gas guiding path for guiding gas to the gas exhaust hole when the gas is released from any one of the plurality of secondary battery cells inside the outer covering case, and the exhaust guide including an inclined wall that is inclined from an orientation facing a direction in which the gas is exhausted.

### Technical advantage of the invention

According to a battery pack of one embodiment of the present invention, when high-temperature and high-pressure gas is released from any one of secondary battery cells, a situation in which gas collides with a part of the exhaust guide to generate a vortex can be avoided by an inclined wall, and thus, safety can be enhanced.

### BRIEF DESCRIPTION OF DRAWINGS

FIG. 1 is a perspective view showing a battery pack in accordance with an exemplary embodiment.
FIG. 2 is a longitudinal sectional view of the battery pack of FIG. 1 taken along line II-II.
FIG. 3 is a lateral sectional view of the battery pack of FIG. 1 taken along line III-III.
FIG. 4 is an exploded perspective view of the battery pack of FIG. 1 with a label removed.
FIG. 5 is an exploded perspective view of the battery pack shown in FIG. 1 in which an outer covering case is disassembled.
FIG. 6 is an exploded perspective view of the battery pack of FIG. 5 in which the outer covering case is disassembled viewed obliquely from below.
FIG. 7 is an exploded perspective view of a battery module of FIG. 5.
FIG. 8 is a sectional view showing a route for exhausting a high-pressure gas from the outer covering case in the battery pack of FIG. 2.
FIG. 9 is an exploded perspective view of an upper case of FIG. 6.
FIG. 10 is an exploded perspective view showing a state in which a gas cooling plate is removed from the upper case of FIG. 9.
FIG.11 is a horizontal sectional view of the battery pack of FIG. 1 taken along line XI-XI.
FIG. 12 is an enlarged sectional view of a main part of the battery pack shown in FIG. 2
FIG. 13 is an enlarged perspective view of the upper case of FIG. 10.
FIG. 14 is a sectional view showing a battery pack according to Comparative Example.
FIG. 15 is an enlarged view of a main part of the battery pack of FIG. 14.

### Description of Embodiments

Embodiments of the present invention may be specified by the following configurations and features.

In a battery pack according to another embodiment of the present invention, in the above embodiment, the inclined wall extends in an orientation intersecting the direction in which the gas is exhausted when the gas is released from any one of the plurality of secondary battery cells viewed in a plan view.

Furthermore, in a battery pack according to another embodiment of the present invention, in any of the above embodiments, the inclined wall is unitarily provided on the inner surface of the outer covering case.

Furthermore, in the battery pack according to another embodiment of the present invention, in any of the above embodiments, the gas guiding path includes a pressure reduction structure for reducing a pressure of the high-pressure gas. The pressure reduction structure is disposed in front of the gas exhaust hole inside the outer covering case. The inclined wall is formed at a stepped part of the gas guiding path formed by the pressure reduction structure.

Furthermore, in the battery pack according to another embodiment of the present invention, in any of the above embodiments, the outer covering case is formed in an outer shape extending in one direction.

Furthermore, in the battery pack according to another embodiment of the present invention, in any of the above embodiments, the inclined wall is inclined in an extending direction of the outer covering case.

Furthermore, in the battery pack according to another embodiment of the present invention, in any of the above embodiments, a plurality of rows of the inclined walls is formed in the extending direction of the outer covering case.

Furthermore, in the battery pack according to another embodiment of the present invention, in any of the above embodiments, the inclined walls are formed in a staggered manner in the extending direction of the outer covering case.

Furthermore, the battery pack according to another embodiment of the present invention further includes a battery holder for holding the plurality of secondary battery cells in any of the above embodiments.

Furthermore, in the battery pack according to another embodiment of the present invention, in any of the above embodiments, the gas guiding path is formed in a region in which a surface of the battery holder faces an inner surface of the outer covering case.

Furthermore, in the battery pack according to another embodiment of the present invention, in any of the above embodiments, the outer covering case is made of resin.

Furthermore, in the battery pack according to another embodiment of the present invention, in any of the above embodiments, the inclined wall includes a curved surface.

Hereinafter, exemplary embodiments of the present invention are described with reference to the drawings. However, the exemplary embodiments described below are examples for giving a concrete form to the technical idea of the present invention, and therefore, the present invention is not limited to the following. Furthermore, members set forth in claims are never limited to members in the exemplary embodiments. In particular, a size, a material, a shape, relative arrangement, and the like, of the components described in the exemplary embodiments are not aimed at limiting the scope of the present invention only thereto unless otherwise described but merely illustrative. Note here that a size, a positional relationship, or the like, of the members in the respective drawings may be exaggerated for clarifying the description. Furthermore, in the following description, the same or similar members are represented by the same names and reference symbols, and the detailed description thereof is appropriately omitted. Furthermore, as for each component of the present invention, one member may serve as a plurality of components by forming the plurality of components with the same member. On the contrary, a function of one member may be shared by a plurality of members.

The battery pack of the present invention can be used as driving power sources for moving objects such as electric carts, electric scooters, and assisted bicycles, also as power sources for portable electric devices such as radios, electric cleaners, and power tools, or as backup power sources for servers used for stationary power storages, as electric power sources for homes, businesses, and factories, and driving power sources for vehicles such as hybrid cars and electric cars, and the like. Hereinafter, as one exemplary embodiment of the present invention, a battery pack to be used as a driving power source for an electric cart is described.

### [First Exemplary Embodiment]

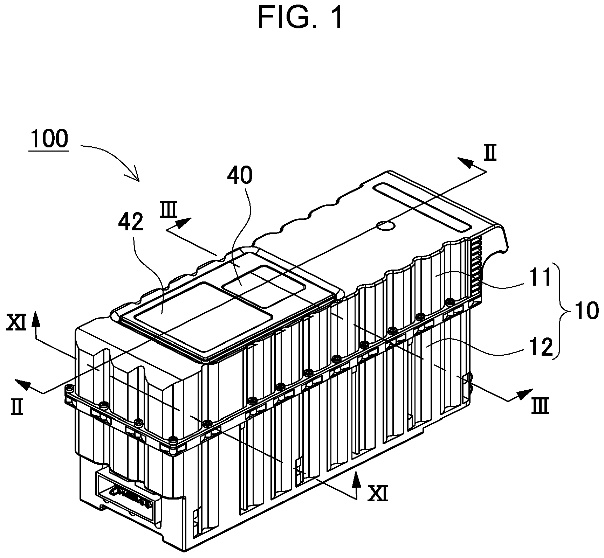

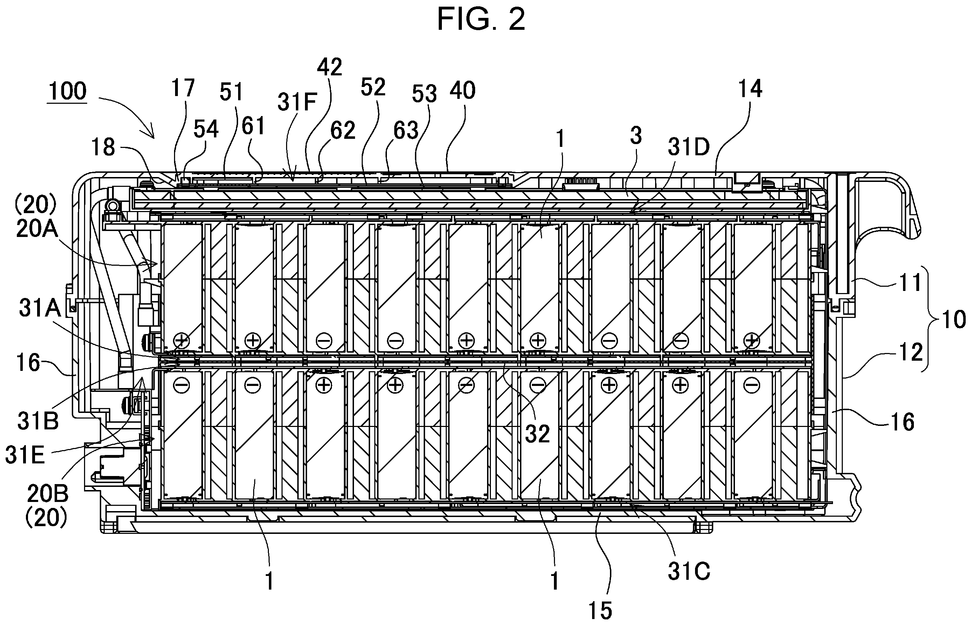

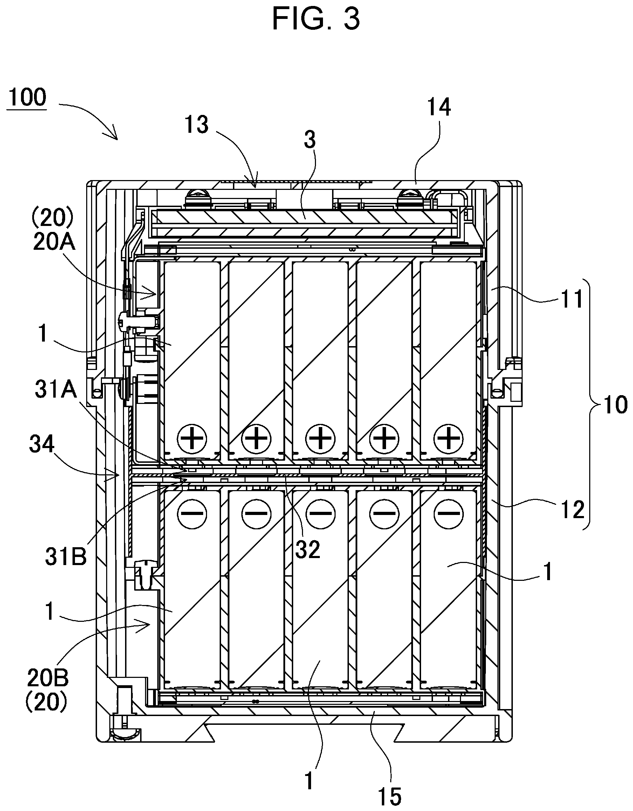

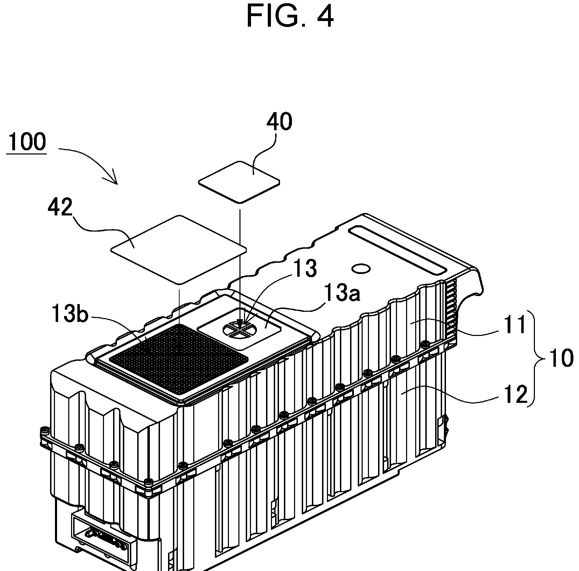

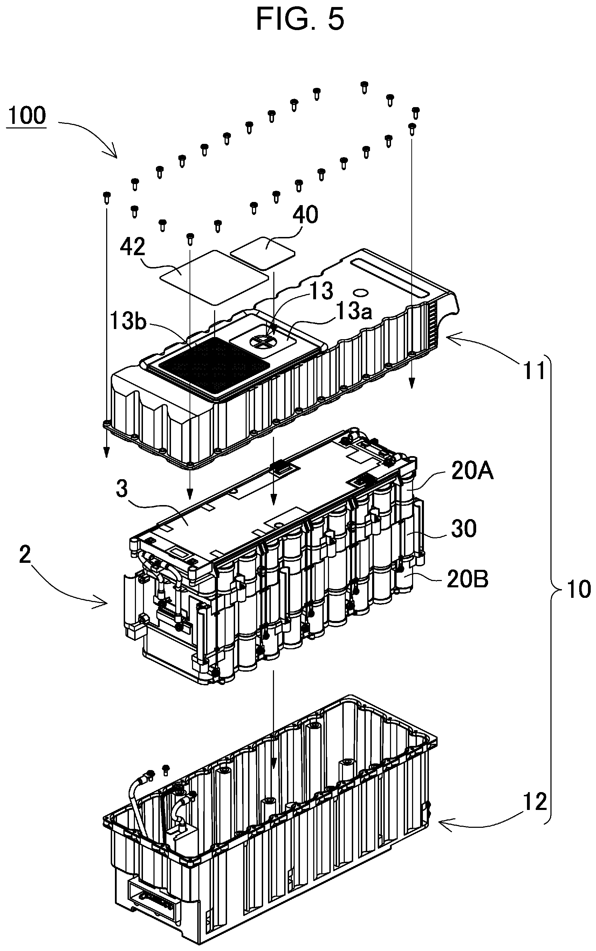

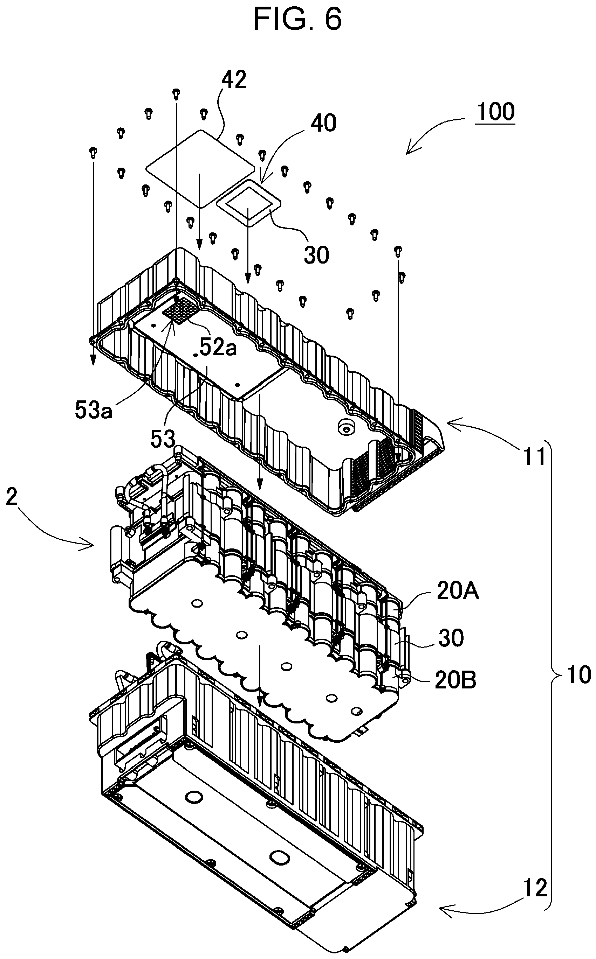

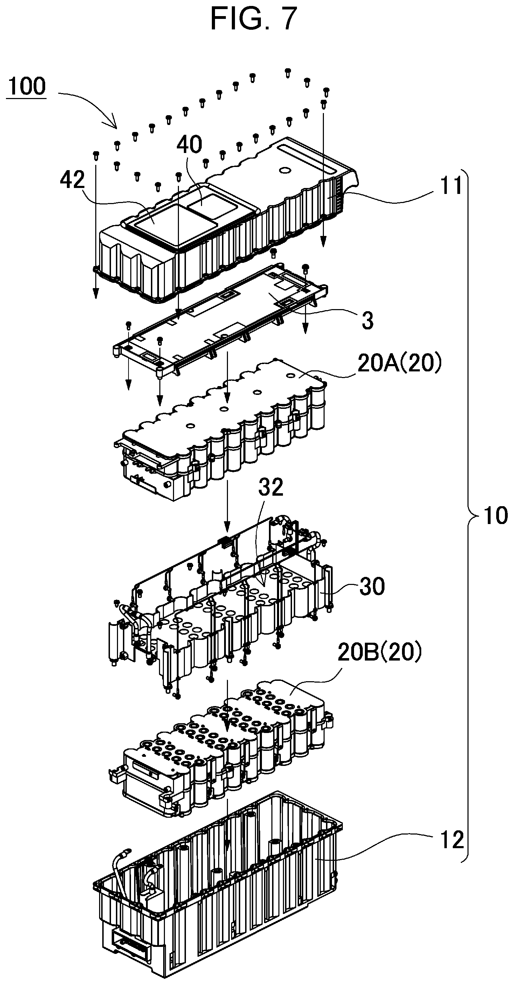

Battery pack 100 according to a first exemplary embodiment of the present invention is shown in FIGs. 1 to 7. In these drawings, FIG. 1 is a perspective view showing battery pack 100 in accordance with the first exemplary embodiment, FIG. 2 is a longitudinal sectional view of battery pack 100 of FIG. 1 taken along line II-II, FIG. 3 is a lateral sectional view of battery pack 100 of FIG. 1 taken along line III-III, FIG. 4 is an exploded perspective view of battery pack 100 of FIG. 1 with label 40 removed, FIG. 5 is an exploded perspective view of battery pack 100 shown in FIG. 1 in which outer covering case 10 is disassembled, FIG. 6 is an exploded perspective view of battery pack 100 of FIG. 5 in which an outer covering case 10 is disassembled viewed obliquely from below, and FIG. 7 is an exploded perspective view of battery module 2 of FIG. 5, respectively. Battery pack 100 shown in these drawings includes outer covering case 10, battery module 2, and circuit board 3.

### (Outer covering case 10)

Outer covering case 10 houses battery module 2 and circuit board 3. Outer covering case 10 is formed in a box shaped appearance as shown in FIGs. 1 and 4. Outer covering case 10 is divided into two parts, upper case 11 and lower case 12 as shown in, for example, FIGs. 2 to 3 and FIGs. 5 to 6. Outer covering case 10 is preferably made of a member with excellent insulation properties, for example, resin such as polycarbonate and a PC-ABS alloy, but may also be made of a metal member such as aluminum and its alloy. Furthermore, inside outer covering case 10, as shown in FIGs. 2 to 3 and FIGs. 5 to 6, etc., an internal space is provided to house battery module 2 and circuit board 3.

### (Battery module 2)

Battery module 2 is also called a core pack, and the like, and includes a plurality of battery blocks 20. In the examples shown in FIGs. 2 to 3 and FIGs. 5 to 7, battery module 2 includes first battery block 20A and second battery block 20B. First battery block 20A and second battery block 20B include a plurality of secondary battery cells 1, respectively. The plurality of secondary battery cells 1 is coupled in series or in parallel via lead plates. The number of series connections and the number of parallel connections can be arbitrarily set according to required specifications. Preferably, first battery block 20A and second battery block 20B use the same number of secondary battery cells 1. Furthermore, it is preferable that the number of series connections and the number of parallel connections be the same in first battery block 20A and second battery block 20B. In the example shown in FIGs. 2 and 3, each battery block 20 uses 90 secondary battery cells in total, arranged in 9 series connections and 10 parallel connections, but the configuration is not limited to this.

Each battery block 20 includes a plurality of secondary battery cells 1. For example, battery block 20 includes a battery holder for housing secondary battery cells 1. The battery holder includes a plurality of storage tubes each individually housing secondary battery cells 1. Such a battery holder can be made of resin such as polycarbonate, which is excellent in insulation properties. Note here that in the example shown in FIG. 7, each battery block 20 includes 90 secondary battery cells 1, but the number of the secondary battery cells constituting each battery block is not limited to this, and the number may be optionally determined. Furthermore, the number of secondary battery cells may be changed in a part of battery blocks.

Note here that the examples shown in FIGs. 2 to 3 and 7 show a configuration in which battery block 20 includes two parts, first battery block 20A and second battery block 20B. However, needless to say, in the present invention, the number of the battery blocks is not limited to two, but may be three or more.

### (Secondary battery cell 1)

For one or more secondary battery cells 1, secondary battery cells whose outer shape is cylindrical or prismatic can be used. In the examples shown in FIGs. 2 to 3 and 7, cylindrical secondary battery cells 1 are used in a staggered arrangement in a longitudinal orientation. Note here that the number and arrangement of secondary battery cells 1 are not limited to this example, and any number and arrangement can be employed appropriately. Each secondary battery cell 1 includes positive and negative electrodes, respectively. The positive and negative electrodes are preferably provided on one end surface of secondary battery cell 1. For secondary battery cell 1, known secondary batteries such as a lithium-ion secondary battery, a nickel hydride battery, a nickel cadmium battery, and the like, can be used as appropriately.

### (Safety valve)

Furthermore, the outer covering can of secondary battery cell 1 is provided with a safety valve. The safety valve opens in response to an increase in the internal pressure of the outer covering can, and releases gas inside the outer covering can to the outside.

### (Gas exhaust hole 13)

On the other hand, outer covering case 10 in a part includes gas exhaust hole 13 for releasing high-pressure gas to the outside when the safety valve of secondary battery cell 1 is opened and high-pressure gas is exhausted, as shown in FIGs. 2 to 5, etc. Herein, gas exhaust hole 13 is formed in label attachment region 13a to which label 40 is attached, and gas exhaust hole 13 is closed by attaching label 40. Furthermore, when high-temperature and high-pressure gas is ejected from gas exhaust hole 13, label 10 that blocks gas exhaust hole 13 is broken by a pressure or heat of the gas, and gas exhaust hole 13 is opened.

Gas exhaust holes 13 are provided unevenly on one side of top surface 14 of outer covering case 10. Furthermore, gas exhaust hole 13 may not necessarily be provided on top surface 14 of outer covering case 10, but may be provided on bottom surface 15, side surface 16, or the like. Also, gas exhaust holes 13 may be opened in a plurality of locations. Gas exhaust hole 13 is designed according to the volume of outer covering case 10, the battery capacity of secondary battery cell 1, and the like, and has a width of, for example, 12 mm. In the example shown in FIG. 4, gas exhaust hole 13 is in a shape obtained by dividing a circle into four sections. Thus, when a thin label is pasted, an effect of preventing the central part from being recessed or damaged by external force can be achieved.

### (Label 40)

Label 40 is adhesively attached to a peripheral edge of exhaust hole 13 of outer covering case 10 and attached to label attachment region 13a of outer covering case 10. Label attachment region 13a is formed in a stepped part that is one stage lower than other regions of outer covering case 10 so as to be substantially flush with the surface of label 20. On label 40, information printed in advance on the specifications, for example, the model number, manufacturer's name, battery capacity, and ratings, of battery pack 100. Label 40 is made of a resin such as polycarbonate and polypropylene, or is made of a paper base material impregnated or coated with a resin. Furthermore, a thickness of label 40 is, for example, 0.5 mm. The outer shape of label 40 is rectangular. In the example shown in FIG. 4, the outer shape of label 40 is an oblong rectangular shape with corners chamfered, but the outer shape is not limited to this, and may be vertically long shapes, polygonal shapes such as a square shape, and an octagonal shape.

### (Double-sided tape 30)

Furthermore, in order to attach label 40, label 40 includes an adhesive surface at least partially in the back side. Preferably, as shown in FIGs. 4 to 6, double-sided tape 30 is attached around label 40 and the adhesive surface is attached to label 40. Double-sided tape 30 is a member for fixing label 40 in a position that closes gas exhaust hole 13. Furthermore, an adhesive agent or the like, instead of double-sided tape 30, may be used for adhesively attaching label 40.

Furthermore, in the example shown in FIG. 4 etc., second label 42 is attached to a region on the upper surface of outer covering case 10 that is aligned with label 40. Furthermore, upper case 11 includes second label attachment region 13b to which second label 42 is attached. A checkerboard-shaped slit is formed in second label attachment region 13b so as to prevent air bubbles from entering when second label 42 is attached.

### (Circuit board 3)

Each first battery block 20A and each second battery block 20B are coupled to circuit board 3 via a lead plate. Circuit board 3 is provided with a charging/discharging circuit that charges and discharges secondary battery cell 1, a protection circuit that monitors the voltage and temperature of the secondary battery cell 1 and cuts off an electric current in an abnormal state. Circuit board 3 is made of a glass epoxy board or the like.

### (Spacer 30)

As shown in FIGs. 2 to 3 and 7, spacer 30 is interposed between first battery block 20A and second battery block 20B. Spacer 30 is made of a member with excellent insulation properties, for example, a resin such as polycarbonate or a PC-ABS alloy.

### (Partition plate 32)

Spacer 30 includes partition plate 32 that partitions first space 31A facing first battery block 20A and second space 31B facing second battery block 20B. Partition plate 32 is preferably formed so that the height of first space 31A and the height of second space 31B are approximately equal. Partition plate 32 is preferably formed unitarily with spacer 30.

### (Gas guiding path 34)

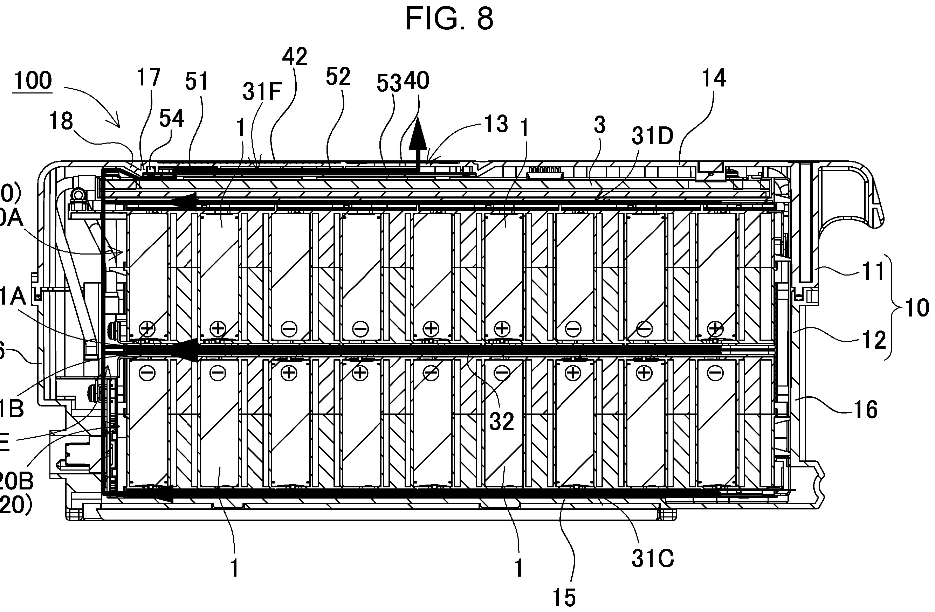

Outer covering case 10 defines gas guiding path 34 inside thereof. When gas is released from any of secondary battery cells 1, gas guiding path 34 guides the gas to gas exhaust hole 13. In the example shown in the sectional view of FIG. 8, gas guiding path 34 includes first space 31A and second space 31B formed between first battery block 20A and second battery block 20B, third space 31C formed between the bottom surface of second battery block 20B and the inner surface of bottom surface 15 of lower case 12, and fourth space 31D formed between a top surface of first battery block 20A and circuit board 3 arranged on the inner surface of top surface 14 of upper case 11. Each space extends so as to cross the inside of outer covering case 10 in the longitudinal direction of outer covering case 10. Furthermore, on the inner surface of side surface 16 of outer covering case 10, these first space 31A, second space 31B, third space 31C, and fourth space 31D communicate with fifth space 31E extending toward one surface in the short direction of outer covering case 10 (the vertical direction of left-side surface 16 in FIG. 8). Furthermore, fifth space 31E communicates with sixth space 31F formed near the inner surface of top surface 14 of outer covering case 10. Sixth space 31F extends to gas exhaust hole 13 in the longitudinal direction at the rear surface side of upper case 11. With this configuration, as shown in FIG. 8, when high-temperature and high-pressure gas is exhausted from any one of secondary battery cells 1, the gas is exhausted into any one of first space 31A, second space 31B, third space 31C, and fourth space 31D, in response to a position in which the gas is exhausted, that is, a position of the safety valve provided in the secondary battery cell, guided to sixth space 31F through fifth space 31E, and finally exhausted to the outside of outer covering case 10 from gas exhaust hole 13. Note here that in this structure, an example was escribed in which fifth space 31E is provided on the left side of the inner surface of the outer covering case in FIG. 8, but the present disclosure is not limited to this structure, and a gas guiding path may also be formed separately on the right side of the inner surface of the outer covering case.

Furthermore, it is desirable that each end surfaces of secondary battery cells 1 constituting first battery block 20A and end surface of secondary battery cells 1 constituting second battery block 20B are arranged in an orientation facing each other with spacer 30 interposed therebetween. Furthermore, it is desirable that a safety valve is provided on one of the end surfaces of the secondary battery cells 1 of first battery block 20A and the end surface of secondary battery cell 1 of second battery block 20B which are in an orientation facing each other with spacer 30 interposed therebetween. For example, it is desirable that one of the facing end surfaces of the secondary battery cells of first battery block 20A and the end surfaces of the secondary battery cells of the second battery block 20B be a positive electrode and the other be a negative electrode. In general, since a safety valve is provided on either the positive electrode or the negative electrode, by placing a safety valve only on either side of the surface where the electrodes face, high-temperature and high-pressure gas is emitted from both end surfaces can be eliminated. Safety can be ensured.

### (Gas cooling structure)

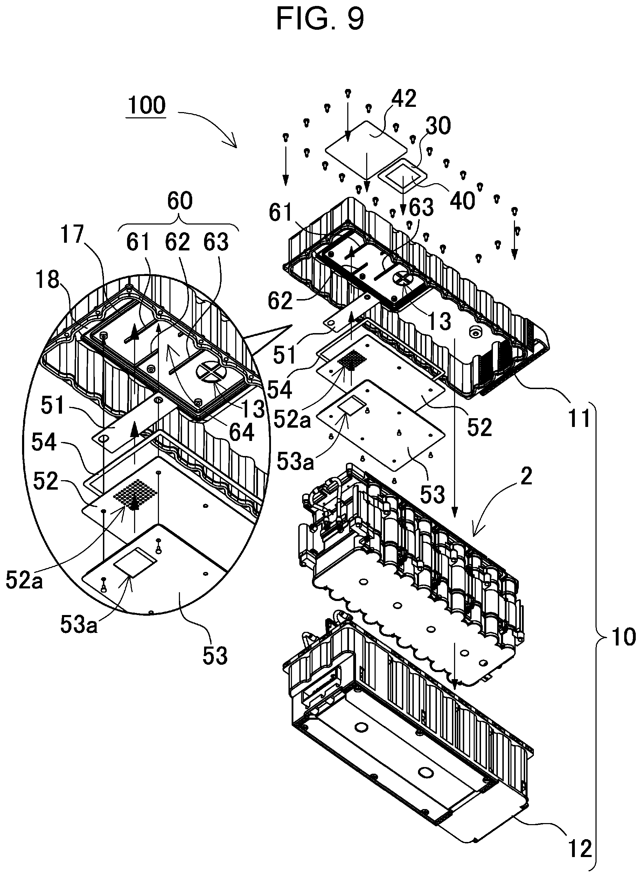

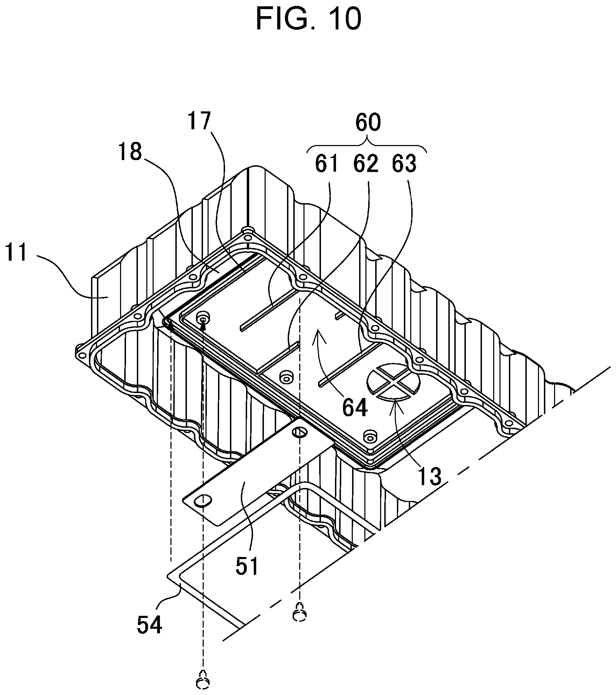

A gas cooling structure can be added in the middle of gas guiding path 34 to cool the high-temperature gas. In the examples shown in FIGs. 9 and 10, first cooling plate 51, second cooling plate 52, and insulating plate 53 are fixed to the inner surface of upper case 11 as a gas cooling structure. First cooling plate 51 and second cooling plate 52 are made of a material with excellent thermal conductivity and heat resistance, for example, metal such as aluminum. Insulating plate 53 is made of a material with excellent insulation property and heat resistance, such as a sheet material such as mica or Nomex (registered trademark).

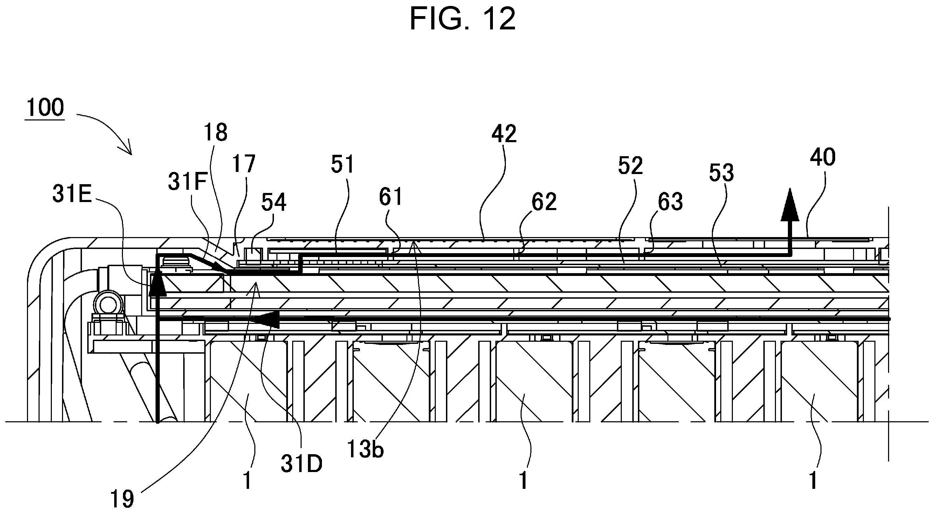

As shown in the sectional view of FIG. 12, second cooling plate 52 and insulating plate 53 are laminated and brought into close contact with each other to achieve insulation with respect to circuit board 3 provided apart from the lower surface of insulating plate 53. On the other hand, second cooling plate 52 and first cooling plate 51 are apart from each other, and gas guiding path 34 for guiding high-temperature gas is constructed between second cooling plate 52 and first cooling plate 5. With this configuration, by allowing high-temperature gas to flow between first cooling plate 51 and second cooling plate 52, the gas is brought into contact with first cooling plate 51 and second cooling plate 52, and heat of gas can be deprived to reduce a temperature.

A spacer may be provided to make first cooling plate 51 and second cooling plate 52 apart from each other. For example, a nut may be interposed when first cooling plate 51 and second cooling plate 52 are screwed together. Furthermore, in the example shown in, for example, FIG. 12, cushioning material 54 is interposed so as to make second cooling plate 52 apart from the inner surface of upper case 11. Cushioning material 54 is formed in an annular shape along the contour of second cooling plate 52. Such cushioning material 54 can be made of urethane, rubber, silicone, or the like. Furthermore, in order to fix the annular cushion material 54 in a fixed position on the inner surface of upper case 11, cushion guide wall 17 for holding cushion material 54 is formed on the inner surface of top surface 14 of upper case 11. Cushion guide wall 17 is unitarily formed on the inner surface of upper case 11. As with upper case 11, cushion guide wall 17 can be made of resin such as polycarbonate or a PC-ABS alloy.

Note here that in the example shown in FIG. 9 etc., first cooling plate 51 is formed in a size that overlaps a part of second cooling plate 52. In other words, first cooling plate 51 is formed smaller than second cooling plate 52. This is because a labyrinth structure described later is provided adjacent to first cooling plate 51. However, it goes without saying that first cooling plate 51 may be formed to be in the same size as second cooling plate 52. For example, the labyrinth structure may be omitted, or a labyrinth structure may be provided on the surface of the first cooling plate.

### (Pressure reduction structure)

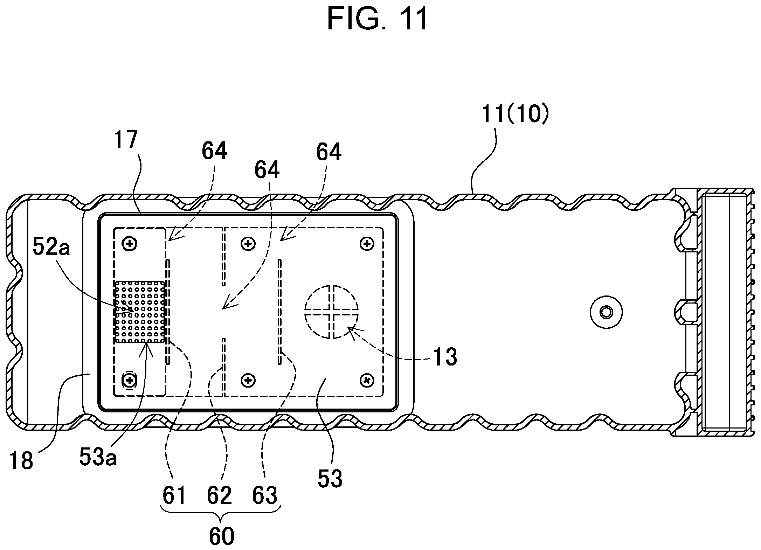

Furthermore, a pressure reduction structure for reducing a pressure of the high-pressure gas may be added in the middle of gas guiding path 34. Also, the pressure reduction structure and the gas cooling structure may be integrated. In the examples shown in FIGs. 9 and 11, opening region 53a is provided in a part of insulating plate 53, and hole region 52a in which a large number of holes are opened in second cooling plate 52 at a position corresponding to opening region 53a of insulating plate 53. For such second cooling plate 52, a punching metal in which hole regions 52a are formed by punching can be used. As shown in the sectional view of FIG. 12, the pressure reduction structure with this structure allows the high-temperature and high-pressure gas guided to sixth space 31F to be exposed through opening region 53a of insulating plate 53 to pass through hole region 52a in second cooling plate 52. The pressure of the high-pressure gas is reduced due to the resistance when passing through hole region 52a. In addition, by allowing the high-pressure gas to pass through hole region 52a of second cooling plate 52 made of metal, heat is also deprived and the temperature is lowered. In this way, hole region 52a of second cooling plate 52 functions as the pressure reduction structure and also functions as a gas cooling structure.

### (labyrinth structure)

In addition, as a part of the pressure reduction structure, a labyrinth structure that inhibits traveling of high-pressure gas may be added. In the examples shown in FIGs. 9 to 11, inhibition wall 60 is formed adjacent to first cooling plate 51 as the labyrinth structure. Inhibition wall 60 is provided in an orientation intersecting the longitudinal direction of outer covering case 10, which is the traveling direction of the high-pressure gas. It is preferable that a plurality of inhibition walls 60 is provided in multiple stages. In addition, inhibition wall 60 does not completely block the gas in the traveling direction, but guides the gas to passage region 64 by providing passage region 64 that is partially open, and finally the gas is guided to gas exhaust hole 13 while the gas is guided to passage region 64. However, by arranging passage region 64 in a discontinuous manner, such as in a staggered pattern, instead of making continuous in the longitudinal direction, gas exhaust hole 13 can be guided while the traveling of the gas is prevented every time, the momentum of the gas is gradually reduced, and the pressure is lowered. When inhibition walls 60 are provided in multiple stages as described above, inhibition walls 60 are preferably formed in a staggered manner in the extending direction of outer covering case 10.

In the example shown in FIGs. 9 and 10, first inhibition wall 61 is arranged in the center in the width direction of sixth space 31F with respect to the gas that has been guided to sixth space 31F and passed through first cooling plate 51, and left and right sides of first inhibition wall 61 are allowed to serve as passage regions 64. As a result, the high-pressure gas is branched into left and right at first inhibition wall 61. Second inhibition walls 62 in the subsequent second stage are arranged at both ends in the width direction of sixth space 31F, and passage region 64 is provided in the center. As a result, the high-pressure gas that has been once branched to left and right are gathered again in the center, and allowed to pass through passage region 64 in a state in which the high-pressure gas collides with each other to reduce the pressure. Furthermore, third inhibition wall 63 of the third stage is again arranged at the center in the width direction of sixth space 31F, and the left and right sides are allowed to serve as passage regions 64. As a result, the high-pressure gas is again branched to left and right, and allowed to pass, and the pressure is further reduced. In this way, by arranging inhibiting walls 60 in multiple stages alternately in the longitudinal direction of outer covering case 10, which is the main traveling direction of the gas, the gas is bent to left and right and proceeds in a meandering manner. The gas travels while remarkably reducing a pressure, and is finally exhausted from outer covering case 10 through gas exhaust hole 13.

### (Exhaust guide 6)

A part of such gas guiding path 34 is defined by exhaust guide 6. In the examples shown in FIGs. 9 and 10, exhaust guide 6 that defines sixth space 31F in gas guiding path 34 is fixed to the inner surface of upper case 11. In this example, exhaust guide 6 is unitarily formed on the inner surface of upper case 11. However, exhaust guide 6 is not limited to this configuration, and may be configured as a separate member, for example, from the upper case. Furthermore, the exhaust guide may be provided on another member such as the upper surface of the circuit board.

### (Inclined wall 18)

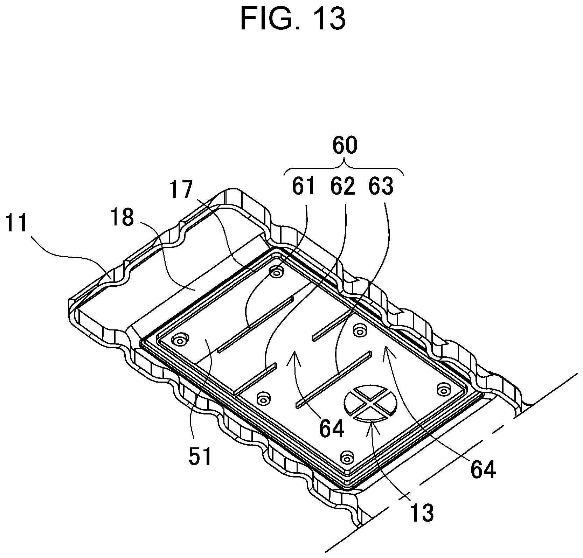

Exhaust guide 6 includes inclined wall 18 that is inclined from an orientation facing the gas exhausting direction. In the example shown in FIG. 13, inclined wall 18 is formed on the inner surface of upper case 11 in front of cushion guide wall 17. Furthermore, exhaust guide 6 is provided with stepped part 19 as a pressure reduction structure formed on the inner surface of top surface 14 of upper case 11 of outer case 10, and it may be understood that stepped part 19 is provided with inclined wall 18. By providing such an inclined wall 18, when high-temperature and high-pressure gas is released from secondary battery cell 1, inclined wall 18 can avoid collision of gas with a part of exhaust guide 6 and generation and retention of a vortex, and can enhance the safety.

Herein, for comparison, description is carried out in comparison with battery pack 700 shown in the sectional views of FIGs. 14 and 15. In battery pack 700 of FIGs. 14 and 15, a wall is provided between the top surface of battery module 702 and the inner surface of top surface 714 of upper case 711 in order to define exhaust path 734. This wall is made of resin, like outer covering case 710. In battery pack 700, a case will be considered in which one of secondary battery cells 701 opens a safety valve due to a thermal runaway or the like, and high-temperature and high-pressure gas is emitted into outer covering case 710. The present inventors have found that in the process in which high-temperature and high-pressure gas is guided along exhaust path 734 inside outer covering case 710, when the high-temperature and high-pressure gas collides with the wall vigorously, the gas may generate a vortex VX and remain at high temperature. It is considered that high-temperature and high-pressure gas may ignite combustible materials and cause a flame. When outer covering case 710 is locally melted by the retaining combustion gas, outer covering case 710 is ruptured, a combustion gas leaks to the outside of outer covering case 710 therefrom, and fire leakage may occur.

On the other hand, as a result of intensive study, the inventors of the present application found a structure that makes it difficult for gas to stagnate, that is, a structure that makes it difficult for a vortex to occur while guiding the gas to a desired route, and have developed a battery pack according to this exemplary embodiment. Specifically, the inventors have found that a vortex is more likely to occur when the wall is placed perpendicular to the direction in which gas travels. Thus, in exhaust guide 6 that defines gas guiding path 34, in a region where thinning is likely to occur or in a region close to the surface of outer covering case 10, a wall is provided not at right angle to the direction in which gas travels, and by forming the inclined wall 18 that is inclined in the traveling direction, it is possible to reduce the risk of vortex generation without inhibiting the traveling of gas, and to suppress a leakage of fire due to local heating and melting.

For example, in sixth space 31F provided on the inner side of top surface 14 of outer covering case 10, a vortex VX easily occurs when gas collides with a right-angle wall as shown in the sectional view of FIG. 15, so that by providing inclined wall 18 on exhaust guide 6, as shown in the sectional view of FIG. 12, high-temperature and high-pressure gas can be smoothly guided in a gap between insulating plate 53 and circuit board 3, thus reducing a risk of retaining of gas.

When gas guiding path 34 is constructed inside outer covering case 10, it is desirable to suppress the pressure and temperature of the gas to some extent in a stage of exhausting the gas to the outside of outer covering case 10. Therefore, it is desirable to allow the gas emitted from the safety valve inside outer covering case 10 to travel a certain distance inside outer covering case 10 and reduce its momentum during that time. Therefore, when outer covering case 10 is in a long outer shape longer in one direction, it is preferable to construct gas guiding path 34 in the longitudinal direction of outer covering case 10 to increase the travel distance of the gas. Therefore, since the gas guiding direction is in the extending direction of outer covering case 10, it is preferable that inclined wall 18 be inclined in the extending direction of outer covering case 10.

Furthermore, inclined wall 18 is not limited to be formed in one place, but may be formed in a plurality of rows in the extending direction of outer covering case 10.

In addition, it is preferable that inclined wall 18 is provided on exhaust guide 6 extending in an orientation intersecting the gas exhaust direction viewed in a plan view. If gas collides with intersecting walls, there is a high possibility that a vortex will be generated, so by providing inclined wall 18 on such a surface, the risk of gas retention can be reduced.

For example, an inclined wall may be provided in front of first inhibiting wall 61, second inhibiting wall 62, and third inhibiting wall 63 of the labyrinth structure described above. However, since the risk of vortex generation is also reduced in a state in which the momentum or pressure of the gas is sufficiently reduced, in the region near gas exhaust hole 13, even if the wall intersects the gas exhaust direction, the inclined wall is not necessary provide.

Further, more inclined wall 18 is not necessarily in a flat shape, and may include a curved surface. In the present disclosure, inclined wall 18 also includes a state in which the inclined surface is curved.

In the above example, the battery pack is mounted on an electrical device to be driven, and power is supplied to the electrical device. When a remaining capacity of a battery pack becomes low or when a battery pack deteriorates over time, the battery pack can be exchanged and the electrical device can be used continuously. However, the present invention does not limit the battery pack to an exchangeable battery pack that mainly houses secondary battery cells, but can also be applied to an embodiment in which secondary battery cells are housed within a casing of the electrical device. In the present disclosure, the battery pack is only required to house secondary battery cells in a case, and also includes a battery pack that includes a driving secondary battery cell built into the casing of an electrical device itself. That is to say, the present invention is not limited to exchangeable battery packs, but can also be applied to electrical devices incorporating secondary battery cells.

### [Industrial Applicability]

A battery pack according to the present invention can be suitably used as driving power sources for moving objects such as electric carts and electric scooters. It can also be used as power sources for radio equipment, or as a power source for portable electric devices such as electric cleaners and power tools.

### REFERENCE MARKS IN THE DRAWINGS

100, 700 battery pack
1 secondary battery cell
1 secondary battery cell
2 battery module
3 circuit board
6 exhaust guide
10 outer covering case
11 upper case
12 lower case
13 gas exhaust hole; 13a label attachment region; 13b second label attachment region
14 top surface
15 bottom surface
16 side surface
17 cushion guide wall
18 inclined wall
19 stepped part
20 battery block; 20A first battery block; 20B second battery block
30 spacer
31A first space; 31B second space; 31C third space; 31D fourth space; 31E fifth space; 31F sixth space
32 partition plate
34 gas guiding path
40 label
51 first cooling plate
52 second cooling plate; 52a hole region
53 insulating plate; 53a opening region
54 cushioning material
60 inhibition wall
61 first inhibition wall
62 second inhibition wall
63 third inhibition wall
64 passage region
701 secondary battery cell
702 battery module
710 outer covering case
711 upper case
714 top surface of upper case
734 exhaust path
735 wall
VX vortex

## Claims

1. A battery pack comprising:
a plurality of secondary battery cells, and
an outer covering case for housing the plurality of secondary battery cells,
the outer covering case including a gas exhaust hole opened in a part of a surface of the outer covering case,
the outer covering case including an exhaust guide defining a gas guiding path for guiding gas to the gas exhaust hole when the gas is released from any one of the plurality of secondary battery cells inside the outer covering case, and
the exhaust guide including an inclined wall that is inclined from an orientation facing a direction in which the gas is exhausted.

2. The battery pack according to claim 1, wherein
the inclined wall extends in an orientation intersecting the direction in which the gas is exhausted when the gas is released from any one of the plurality of secondary battery cells, viewed in a plan view.

3. The battery pack according to claim 2, wherein
the inclined wall is integrated with an inner surface of the outer covering case.

4. The battery pack according to claim 1, wherein
the gas guiding path includes a pressure reduction structure for reducing a pressure of a high-pressure gas,
the pressure reduction structure is disposed in front of the gas exhaust hole inside the outer covering case, and
the inclined wall is formed by a stepped part of the gas guiding path formed by the pressure reduction structure.

5. The battery pack according to claim 4, wherein
the outer covering case is formed in an outer shape extending in one direction, and
the inclined wall is inclined in an extending direction of the outer covering case.

6. The battery pack according to claim 5, wherein
a plurality of rows of inclined walls each being the inclined wall are provided in the extending direction of the outer covering case.

7. The battery pack according to claim 6, wherein
the inclined walls are formed in a staggered manner in the extending direction of the outer covering case.

8. The battery pack according to any one of claim 1 to claim 7, further comprising a battery holder for holding the plurality of secondary battery cells,
wherein the gas guiding path is formed in a region in which a surface of the battery holder faces an inner surface of the outer covering case.

9. The battery pack according to any one of claim 1 to claim 7, wherein
the outer covering case is made of resin.

10. The battery pack according to any one of claim 1 to claim 7, wherein
the inclined wall includes a curved surface.
